# EUROPEAN PATENT APPLICATION

(11) **EP 4 040 852 A1**
(43) Date of publication of application: **10.08.2022**
(21) Application number: 20872139.9
(22) Date of filing: 17.09.2020
(51) Int. Cl.: H04W 36/02, H04W 92/20, H04W 84/06

(54) **COMMUNICATION DEVICE, BASE STATION DEVICE, AND COMMUNICATION METHOD**

(30) Priority: 03.10.2019 JP 2019183331
(71) Applicant: Sony Group Corporation, Tokyo 108-0075 (JP)
(72) Inventor: MATSUDA, Hiroki, Tokyo 108-0075 (JP); KUSASHIMA, Naoki, Tokyo 108-0075 (JP)
(74) Representative: Witte, Weller & Partner Patentanwälte mbB
(86) International application number: PCT/JP2020/035199
(87) International publication number: WO 2021/065534

(57) **Abstract**

In a wireless communication terminal (50) that performs repetition transmission in which predetermined data is repeatedly transmitted, a wireless communication unit (51) receives continuation information which is information on continuation of the repetition transmission before and after handover, and a control unit (55) performs the repetition transmission after the handover based on the continuation information.

## Description

### Field

The present disclosure relates to a communication device, a base station device, and a communication method.

### Background

Radio access schemes and wireless networks called cellular Long Term Evolution (LTE), LTE-Advanced (LTE-A), LTE-Advanced Pro (LTE-A Pro), New Radio (NR), New Radio Access Technology (NRAT), Evolved Universal Terrestrial Radio Access (EUTRA), or Further EUTRA (FEUTRA) has been studied in the 3rd generation partnership project (3GPP). In the following description, LTE includes LTE-A, LTE-A Pro, and EUTRA, and NR includes NRAT and FEUTRA. A wireless communication base station may is sometimes called evolved NodeB (eNodeB) in LTE, a wireless communication base station is sometimes called gNodeB in NR, and a wireless communication terminal is sometimes referred to as user equipment (UE) in LTE and NR. In addition, a wireless communication terminal in cellular mobile communication is sometimes referred to as a mobile station. LTE and NR are cellular communication systems in which a plurality of areas covered by wireless communication base stations are arranged in a cell shape. A single wireless communication base station may manage a plurality of cells.

NR is a next-generation radio access scheme for LTE, and is a radio access technology (RAT) different from LTE. In NR, studies on a non-terrestrial network (NTN) in which a wireless network is provided from a device floating in the air or space have begun due to increasing demands for wide area coverage, connection stability, and the like. In the non-terrestrial network, for example, a wireless network is provided to a wireless communication terminal via an artificial satellite used as a wireless communication base station (hereinafter, sometimes referred to as a "satellite base station" or simply a "base station"). In addition, when the same radio access scheme as a terrestrial network is used for the non-terrestrial network, the integrated operation between the terrestrial network and the non-terrestrial network becomes easy.

Here, the propagation distance of radio waves between the wireless communication terminal and the satellite base station is long in the non-terrestrial network, and thus, a propagation loss of a signal transmitted from the wireless communication terminal becomes large so that a reception level at the satellite base station decreases. Therefore, the wireless communication terminal repeatedly transmits the same data to the satellite base station, and the satellite base station synthesizes a plurality of pieces of the same data received from the wireless communication terminal to enhance the reception quality. Typically, the reception quality at the satellite base station reaches a desired reception quality that can be decoded, by synthesizing hundreds to thousands of pieces of the same data. Hereinafter, wireless transmission in which the same data is repeatedly transmitted may be referred to as "repetition transmission".

### Citation List

### Non Patent Literature

Non Patent Literature 1: R2-1910452, Intel Corporation, "Conditional Handover for Non-Terrestrial Networks," 3GPP TSG RAN2 Meeting #107, Prague, Czech Republic, August, 2019.

### Summary

### Technical Problem

The satellite base station such as a low earth orbiting satellite in the non-terrestrial network moves at a high speed over the sky. In addition, a cell formed on the ground by the satellite base station also moves in accordance with the movement of the satellite base station. For this reason, even if a wireless communication terminal on the ground is stationary in the non-terrestrial network, switching (handover) of a cell to which the wireless communication terminal belongs is likely to occur frequently. On the other hand, conventionally, the synthesis of pieces of the same data in the repetition transmission is performed individually for each of the satellite base stations, there is a possibility that the reception quality after the data synthesis does not reach the desired reception quality that can be decoded for good if the handover occurs frequently.

Therefore, the present disclosure proposes a technology that can achieve high-quality wireless communication.

### Solution to Problem

In one aspect of the disclosed embodiment, in a communication device that performs repetition transmission in which predetermined data is repeatedly transmitted, a wireless communication unit receives continuation information which is information on continuation of the repetition transmission before and after handover, and a control unit performs the repetition transmission after the handover based on the continuation information.

In another aspect of the disclosed embodiment, in a base station device that communicates with a communication terminal device, which performs repetition transmission in which predetermined data is repeatedly transmitted, a control unit generates continuation information which is information on continuation of the repetition transmission before and after handover, and a wireless communication unit transmits the continuation information to the communication terminal device.

### Brief Description of Drawings

FIG. 1 is a diagram illustrating an overview of a communication system according to an embodiment of the present disclosure.
FIG. 2 is a diagram illustrating a configuration example of the communication system according to the embodiment of the present disclosure.
FIG. 3 is a diagram illustrating an example of a wireless network provided by the communication system.
FIG. 4 is a diagram illustrating an overview of satellite communication provided by the communication system.
FIG. 5 is a diagram illustrating an example of a cell formed by a satellite station.
FIG. 6 is a diagram illustrating a configuration example of a management device according to the embodiment of the present disclosure.
FIG. 7 is a diagram illustrating a configuration example of a base station according to the embodiment of the present disclosure.
FIG. 8 is a diagram illustrating another configuration example of the base station according to the embodiment of the present disclosure.
FIG. 9 is a diagram illustrating still another configuration example of the base station according to the embodiment of the present disclosure.
FIG. 10 is a diagram illustrating a configuration example of a terminal device according to the embodiment of the present disclosure.
FIG. 11 is a diagram illustrating an example of a processing procedure in the communication system according to the embodiment of the present disclosure.
FIG. 12 is a diagram illustrating an example of the processing procedure in the communication system according to the embodiment of the present disclosure.

### Description of Embodiments

Hereinafter, an embodiment of the present disclosure will be described with reference to the drawings. Note that the same parts or the same processes are denoted by the same reference signs in the following embodiment.

In addition, in the present specification and the drawings, a plurality of components having substantially the same or similar functional configuration may be distinguished from each other by the same reference sign followed by different numerals or alphabets. For example, a plurality of components having substantially the same functional configuration are distinguished, like base stations 20T and 20S, as necessary. However, in a case where there is no need to particularly distinguish each of a plurality of components having substantially the same functional configuration, a same reference sign alone will be attached. For example, when it is unnecessary to distinguish between the base stations 20T and 20S, the both is simply referred to as a base station 20.

In addition, the present disclosure will be described in the following item order.

### [Embodiment]

### <1. Overview of Communication System>

### <2. Configuration of Communication System>

2-1. Overall Configuration of Communication System
2-2. Configuration of Management Device
2-3. Configuration of Base Station
2-4. Configuration of Terminal Device

### <3. Processing in Communication System>

<Processing Example 1>
<Processing Example 2>
<Processing Example 3>
<Processing Example 4>
<Processing Example 5>
<Processing Example 6>
<Processing Example 7>
<Processing Example 8>

### <4. Processing Procedure in Communication System>

<Procedure Example 1>
<Procedure Example 2>

### <5. Modifications>

### [Effect of Disclosed Technology]

### [Embodiment]

### <1. Overview of Communication System>

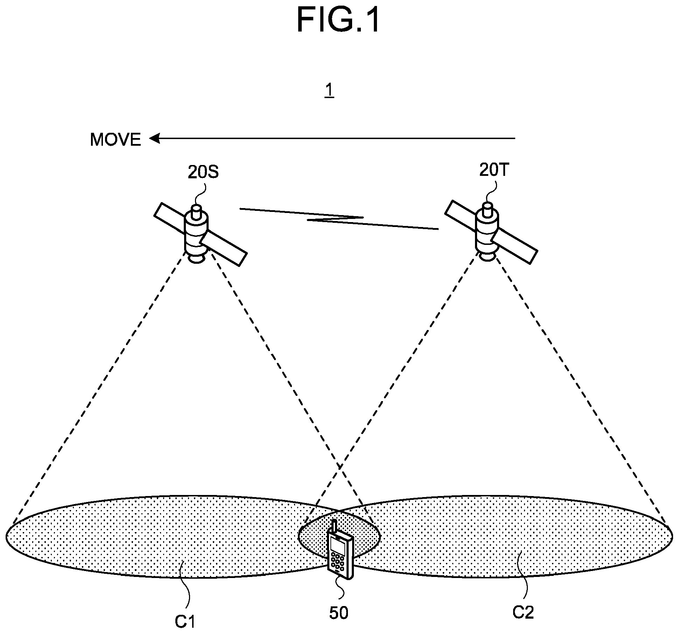

FIG. 1 is a diagram illustrating an overview of a communication system according to an embodiment of the present disclosure. In FIG. 1, a communication system 1 includes a terminal device 50, a base station 20S, and a base station 20T.

The terminal device 50 is a communication device located on the ground. The base stations 20S and 20T are communication devices (e.g. satellite base stations) located in outer space. The terminal device 50 can communicate with the base stations 20S and 20T. In addition, the base station 20S and the base station 20T can communicate with each other.

The base stations 20S and 20T are located in the sky between altitudes of 100 km and 2000 km, for example, and move in orbits at a speed of 7.6 km per second when being located in the sky at an altitude of 600 km. In addition, the base station 20S forms a cell C1 on the ground, and the base station 20T forms a cell C2 on the ground. The terminal device 50 can communicate with the base station 20S when belonging to the cell C1, and can communicate with the base station 20T when belonging to the cell C2. Radii of the cells C1 and C2 are, for example, in the range of tens of kilometers to hundreds of kilometers. The cell is sometimes referred to as a "beam".

Since the base station 20S and the base station 20T move in the sky while maintaining a certain interval, a cell (hereinafter, sometimes referred to as a "belonging cell") to which the terminal device 50 belongs may be handed over from cell C1 to cell C2 even if the terminal device 50 does not move. For example, in a case where diameters of the cells C1 and C2 are 50 km and the terminal device 50 is stationary, the handover to the cell C2 occurs about 6 to 7 seconds after the belonging cell becomes the cell C1. Hereinafter, the base stations 20S and 20T are sometimes collectively referred to as a "base station 20".

### <2. Configuration of Communication System>

Hereinafter, the communication system 1 according to the present embodiment will be described. The communication system 1 includes a non-terrestrial station and provides wireless communication using a non-terrestrial network for a terminal device. In addition, the communication system 1 may provide wireless communication using a terrestrial network. Note that the non-terrestrial network and the terrestrial network provided in the communication system 1 are not limited to wireless networks using a radio access scheme specified by NR. The non-terrestrial network included in the communication system 1 can be wireless networks of the radio access scheme other than NR, such as LTE, wideband code division multiple access (W-CDMA), and code division multiple access 2000 (cdma2000).

Note that the terrestrial station (also referred to as a terrestrial base station) refers to a base station (including a relay station) installed on the ground in the embodiment of the present disclosure. The term "ground" refers to not only the ground (land), but also the ground in the broad sense including underground, over-water, and under-water.

In addition, an application example to NTN will be described as one of use cases of NR in some embodiments. However, an application destination of these embodiments is not limited to NTN, and may be applied to other technologies and use cases (e.g. URLLC).

### Note that a concept of a base station

(hereinafter, also referred to as a base station device) may include a relay station (hereinafter, also referred to as a relay device (relay node)) and a donor base station that provides a wireless interface to the relay station in the following description. In addition, the concept of the base station includes not only a structure equipped with functions of the base station but also a device installed in the structure. The structure is, for example, buildings such as tower buildings, houses, steel towers, railway station facilities, airport facilities, harbor facilities, and stadiums. Note that the concept of the structure includes not only buildings but also non-building structures such as tunnels, bridges, dams, fences, and steel columns, or also includes facilities such as cranes, gates, and windmills. In addition, the concept of the structure includes not only structures on the ground (land) or structures under the ground but also structures on the water such as piers and mega-floats or structures underwater such as ocean observation facilities. Further, the base station may be configured using a set of a plurality of physical or logical devices. For example, the base station in the embodiment of the present disclosure is distinguished into a plurality of devices of a baseband unit (BBU) and a radio unit (RU), and may be interpreted as an aggregate of these plurality of devices.

In addition, the base station in the present embodiment may be any one of or both of the BBU and the RU. The BBU and the RU may be connected by a predetermined interface (e.g. eCPRI). In addition, the RU may also be referred to as a remote radio unit (RRU) or a radio DoT (RD). In addition, the RU may be compatible with a gNB-DU to be described later. In addition, the BBU may be compatible with a gNB-CU to be described later. In addition or instead, the RU may be a device formed integrally with an antenna. An antenna provided in the base station (e.g. the antenna formed integrally with the RU) may adopt an advanced antenna system and support MIMO (e.g. FD-MIMO) or beamforming. In the Advanced Antenna System, the antenna provided in the base station (e.g. the antenna integrally formed with the RU) may include, for example, 64 transmitting antenna ports and 64 receiving antenna ports.

In addition, the base station can be a base station configured to be movable. For example, the base station can be a device installed in a moving body or the moving body itself. The moving body can be a mobile terminal such as smartphones, a moving body that moves on the ground (land) (e.g. a vehicle such as automobiles, buses, trucks, trains, and linear motor cars), or a moving body that moves under (e.g. in a tunnel) the ground (e.g. a subway). In addition, the moving body can be a moving body that moves on water (e.g. a ship such as passenger ships, cargo ships, and hovercrafts), or a moving body that moves underwater (e.g. a submersible ship such as submersible vessels, submarines, and unmanned submarines). In addition, the moving body can be a moving body that moves in the atmosphere (e.g. an aircraft such as airplanes, airships, and aerial vehicles), or a space vehicle that moves outside the atmosphere (e.g. an artificial celestial body such as artificial satellites, spacecraft, space stations, and space probes).

Note that a plurality of base stations may be connected to each other. One or a plurality of base stations may be included in a radio access network (RAN). That is, the base station may be simply referred to as a RAN, a RAN node, an access network (AN), or an AN node. A RAN in LTE is referred to as an enhanced universal terrestrial RAN (EUTRAN). A RAN in NR is referred to as an NGRAN. A RAN in W-CDMA (UMTS) is referred to as a UTRAN. The LTE base station is sometimes referred to as an evolved Node B (eNodeB) or an eNB. That is, EUTRAN includes one or a plurality of eNodeBs (eNBs). In addition, the NR base station is sometimes referred to as a gNodeB or a gNB. That is, the NGRAN includes one or a plurality of gNBs. In addition, the EUTRAN may include a gNB (en-gNB) connected to a core network (EPC) in an LTE communication system (EPS). Similarly, the NGRAN may include an ng-eNB connected to a core network 5GC in a 5G communication system (5GS).

Note that a case where a base station is an eNB, a gNB, or the like may be referred to as 3GPP Access. In addition, a case where a base station is a radio access point may be referred to as Non-3GPP Access. In addition or instead, the base station may be a light extension device called a remote radio head (RRH). In addition, in a case where a base station is a gNB, the base station may be referred to as a combination of the above-described gNB CU (Central Unit) and gNB DU (Distributed Unit), or any one of the both. The gNB CU (Central Unit) hosts a plurality of higher layers (e.g. RRC, SDAP, and PDCP) of an access stratum for communication with UE. On the other hand, the gNB-DU hosts a plurality of lower layers (e.g. RLC, MAC, and PHY) of the access stratum. That is, among messages and information to be described later, RRC signalling (a quasi-static notification) may be generated by the gNB CU, and DCI (a dynamic notification) may be generated by the gNB-DU. In addition, among RRC configurations (quasi-static notifications), some configurations such as IE: cellGroupConfig may be generated by the gNB-DU, and the remaining configurations may be generated by the gNB-CU. These configurations may be transmitted and received by an F1 interface to be described later. The base station may be configured to be capable of communicating with another base station. For example, in a case where a plurality of base station devices are eNBs or a combination of an eNB and an en-gNB, the base stations may be connected by an X2 interface. In addition, in a case where a plurality of base stations are gNBs or a combination of a gn-eNB and a gNB, the devices may be connected by an Xn interface. In addition, in a case where a plurality of base stations are a combination of a gNB CU (Central Unit) and a gNB DU (Distributed Unit), the devices may be connected by the F1 interface described above. The messages and information (information on RRC signalling or DCI) to be described later may be communicated between the plurality of base stations (e.g. via the X2, Xn, or F1 interface).

In addition, in LTE and NR, a terminal device (also referred to as a mobile station, mobile station equipment, or a terminal) is sometimes referred to as user equipment (UE). Instead, the terminal device may be referred to as a mobile station (MS) or a wireless transmission reception unit (WTRU). Note that the terminal device is a type of wireless communication device and is also referred to as a mobile station, mobile station equipment, or a terminal. In an embodiment of the present disclosure, the concept of a terminal device includes not only portable terminal device such as mobile terminal but also a device installed in, for example, a structure or a moving body.

### <2-1. Overall Configuration of Communication System>

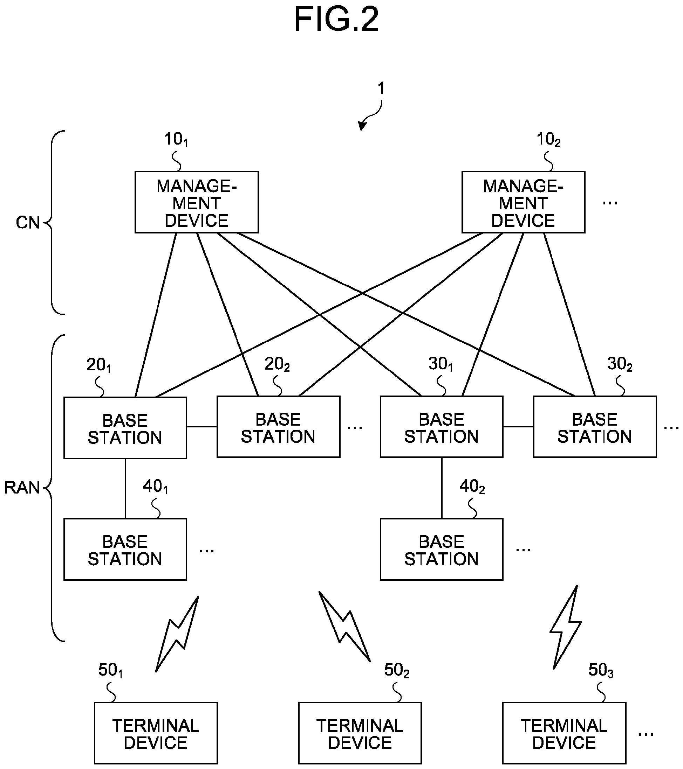

FIG. 2 is a diagram illustrating a configuration example of the communication system 1 according to the embodiment of the present disclosure. The communication system 1 includes: a management device 10, a non-terrestrial base station (hereinafter, simply referred to as a base station) 20, a terrestrial base station (hereinafter, simply referred to as a base station) 30, a relay device (hereinafter, simply referred to as a base station) 40, and a terminal device 50. The communication system 1 provides a user with a wireless network that allows mobile communication, by operating each of wireless communication devices constituting the communication system 1 in cooperation with each other. The wireless communication device is a device having a wireless communication function, and corresponds to the base stations 20, 30, and 40, and the terminal device 50 in the example of FIG. 2.

The communication system 1 may include a plurality of the management devices 10, a plurality of the base stations 20, a plurality of the base stations 30, a plurality of the base stations 40, and a plurality of the terminal devices 50. In the example of FIG. 2, the communication system 1 includes management devices 10₁, 10₂, and the like as the management device 10. In addition, the communication system 1 includes base stations 20₁, 20₂ and the like as the base station 20, and base stations 30₁ and 30₂ and the like as the base station 30. In addition, the communication system 1 includes base stations 40₁, 40₂, and the like as the base station 40 and includes terminal devices 50₁, 50₂, 50₃, and the like as the terminal device 50. Note that an application destination of the embodiment of the present disclosure is not limited to non-terrestrial communication (NTN) as described above. That is, the communication system does not necessarily include a non-terrestrial station.

The management device 10 is a device that manages a wireless network. For example, the management device 10 is a device that functions as a mobility management entity (MME) or an access and mobility management function (AMF). The MME is connected to the EUTRAN by an S1 interface and controls non-access stratum (NAS) signaling with the UE and manages the mobility of the UE. The AMF is connected to the NGRAN by an NG interface, and controls non-access stratum (NAS) signaling with the UE and manages the mobility of the UE. The management device 10 may be included in the core network CN. The core network (CN) is, for example, an evolved packet core (EPC) or a 5G core network (5GC). The management device 10 is connected to each of the plurality of base stations 20 and the plurality of base stations 30. The management device 10 manages the communication between the base station 20 and the base station 30. The core network transfers user data between a packet data network (PDN) or a data network (DN) and the RAN, in addition to a control plane (C-Plane) node such as the management device 10. The core network may include a user plane (U-Plane) node. The U-Plane node in the EPC may include a serving gateway (S-GW) or a PDN-gateway (P-GW). The U-Plane node in 5GC may include a U-Plane function (UPF). For example, the management device 10 manages any position where the terminal device 50 (UE) in the communication system 1 exists for each of the terminal devices 50 in units of areas (e.g. a tracking area and a RAN notification area) including a plurality of cells. Note that the management device 10 may grasp and manage any base station (or any cell) to which the terminal device 50 is connected, of which base station (or which cell) the terminal device 50 exists in their communication area, and the like in units of cells for each of the terminal devices 50.

The base station 20 is a base station that wirelessly communicates with the terminal device 50. In the example of FIG. 2, the base station 20₁ is connected to the base station 40₁ and is also capable of performing wireless communication with the terminal device 50 via the base station 40₁. In the present embodiment, the base station 20 is a base station capable of floating in the air or space. For example, the base station 20 is a non-terrestrial station device such as an aircraft station and a satellite station.

The aircraft station is, for example, a wireless communication device capable of floating in the atmosphere such as an aircraft. The aircraft station may be, for example, a device mounted on an aircraft or the like, or the aircraft itself. Note that the concept of the aircraft includes not only heavy aircrafts such as airplanes and gliders but also light aircrafts such as balloons and airships. In addition, the concept of the aircraft includes rotorcrafts, such as helicopters and autogyros, in addition to the heavy aircrafts and light aircrafts. Note that the aircraft station (or the aircraft on which the aircraft station is mounted) can be an unmanned aerial vehicle such as drones (aerial vehicles). Note that the concept of the unmanned aerial vehicle also includes unmanned aircraft systems (UAS) and tethered unmanned aerial systems (tethered UAS). In addition, the concept of the unmanned aerial vehicles includes lighter-than-air (LTA) UAS and heavier-than-air (HTA) UAS. In addition, the concept of the unmanned aerial vehicles also includes highaltitude UAS platforms (HAPs). Further, in a case where an aircraft station functions as UE, the aircraft station may be aerial UE.

The satellite station is a wireless communication device capable of floating outside the atmosphere. The satellite station may be a device mounted on a space vehicle such as an artificial satellite or may be the space vehicle itself. A satellite serving as the satellite station may be any of a low earth orbiting (LEO) satellite, a medium earth orbiting (MEO) satellite, a geostationary earth orbiting (GEO) satellite, and a highly elliptical orbiting (HEO) satellite. The satellite station can understandably be a device mounted on the low earth orbiting satellite, medium earth orbiting satellite, geostationary earth orbiting satellite, or highly elliptical orbiting satellite.

The base station 30 is a base station that wirelessly communicates with the terminal device 50. In the example of FIG. 2, the base station 30₁ is connected to the base station 40₂ and is also capable of performing wireless communication with the terminal device 50 via the base station 40₂. The base station 30 may be a base station arranged in a structure on the ground or a base station installed in a moving body that moves on the ground. For example, the base station 30 is an antenna installed in a structure such as a building and a signal processing device connected to the antenna. It is a matter of course that the base station 30 may be a structure or a moving body itself.

The base station 40 is a device that functions as a relay station for the base station. The base station 40 is a type of base station. The base station 40 relays communication between the base station 20 and the terminal device 50, or communication between the base station 30 and the terminal device 50. The base station 40 may be a terrestrial station or a non-terrestrial station. The base station 40 may form a radio access network RAN together with the base station 20 and the base station 30.

The terminal device 50 is, for example, a mobile phone, a smart device (smartphone or tablet), a personal digital assistant (PDA), or a personal computer. In addition, the terminal device 50 may be a machine to machine (M2M) device or an Internet of things (IoT) device (e.g. may be referred to as MTC UE, NB-IoT UE, or Cat.M UE). In addition, the terminal device 50 may be a wireless communication device installed in a moving body or the moving body itself. Note that the terminal device 50 may be a relay station that relays satellite communication or a base station that receives satellite communication. The terminal device 50 is compatible with both the terrestrial network and the non-terrestrial network. Thus, the terminal device 50 is capable of communicating with not only a terrestrial station device such as the base station 30 but also a non-terrestrial station device such as the base station 20.

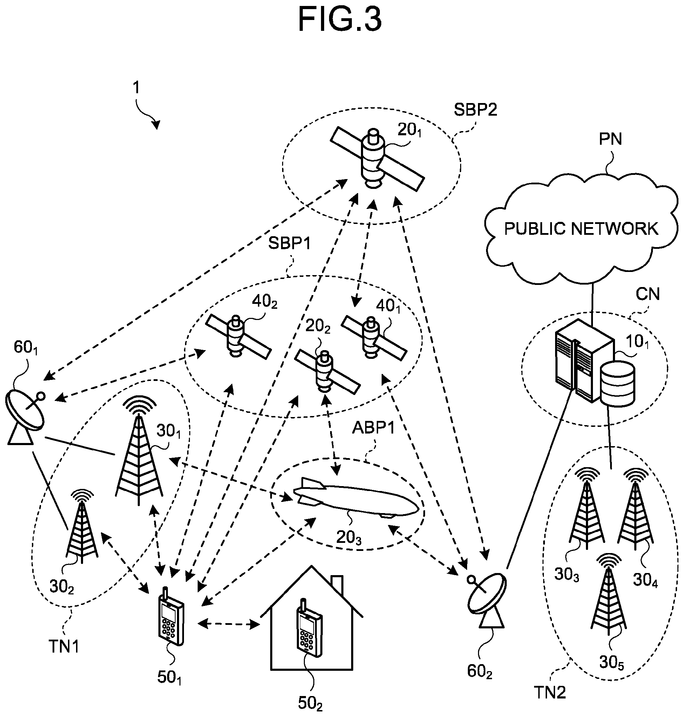

FIG. 3 is a diagram illustrating an example of the wireless network provided by the communication system 1. The base station 20 and the base station 30 respectively form cells. A cell is an area where wireless communication is covered by a base station. The cells formed by the base station 20 and the base station 30 may be any of macro cells, micro cells, femto cells, and small cells. Note that the communication system 1 may be configured such that a single base station manages a plurality of cells or a plurality of base stations manage a single cell. The cells provided by the base stations are referred to as serving cells. The serving cells include a primary cell (PCell) and a secondary cell (SCell). In a case where Dual Connectivity (e.g. EUTRA-EUTRA Dual Connectivity, EUTRA-NR Dual Connectivity (ENDC), EUTRA-NR Dual Connectivity with 5GC, NR-EUTRA Dual Connectivity (NEDC), or NR-NR Dual Connectivity) is provided to UE (e.g. the terminal device 50), PCell and zero SCell or one or more SCells provided by a master node (MN) are referred to as a master cell group. Further, the serving cells may include a PSCell primary secondary cell or a primary SCG cell). That is, in the case where Dual Connectivity is provided to the UE, the PSCell provided by a secondary node (SN) and zero SCell or one or more SCells are referred to as a secondary cell group (SCG). Unless being specially set (e.g. PUCCH on SCell), a physical uplink control channel (PUCCH) is transmitted by the PCell and the PSCell, but is not transmitted by the SCell. In addition, a radio link failure is also detected in the PCell and the PSCell, but is not detected (is not necessarily detected) in the SCell. The PCell and the PSCell have a special role in the serving cell(s) in this manner, and thus, are also referred to as special cells (SpCells). One cell may be associated with one downlink component carrier and one uplink component carrier. In addition, a system bandwidth corresponding to one cell may be divided into a plurality of bandwidth parts. In this case, one or a plurality of bandwidth parts may be set in UE and one bandwidth part may be used in the UE as an active BWP. In addition, radio resources (e.g. a frequency band, numerology (subcarrier spacing), and a slot configuration) that can be used by the terminal device 50 may differ for each cell, each component carrier, or each BWP.

In the example of FIG. 3, the base stations 30₁ and 30₂ constitute a terrestrial network TN1, and base stations 30₃, 30₄, and 30₅ constitute a terrestrial network TN2. The terrestrial network TN1 and the terrestrial network TN2 are terrestrial networks operated by, for example, a mobile network operator (MNO) such as a telephone company. The terrestrial network TN1 and the terrestrial network TN2 may be operated by different mobile network operators (i.e. MNOs with different PLMNs) or may be operated by the same mobile network operator. It is also possible to regard the terrestrial network TN1 and the terrestrial network TN2 as one terrestrial network.

The terrestrial network TN1 and the terrestrial network TN2 are connected individually to a core network. In the example of FIG. 3, the base station 30 that constitutes the terrestrial network TN2 is connected to the core network CN constituted by the management device 10₁ and the like. The core network CN is EPC if the radio access scheme of the terrestrial network TN2 is LTE. In addition, the core network CN is 5GC if the radio access scheme of the terrestrial network TN2 is NR. It is a matter of course that the core network CN is not limited to EPC or 5GC, and may be a core network using other radio access schemes. Note that the terrestrial network TN1 is not connected to the core network in the example of FIG. 3, but the terrestrial network TN1 may be connected to the core network CN. In addition, the terrestrial network TN1 may be connected to a core network (not illustrated) different from the core network CN.

The core network CN is provided with a gateway device, an inter-gateway switch, or the like, and is connected to a public network PN via the gateway device. The public network PN is, for example, a public data network such as the Internet, a regional IP network, a telephone network (such as a mobile telephone network and a fixed telephone network). The gateway device is, for example, a server device connected to the Internet, a regional IP network, or the like. The inter-gateway switch is, for example, a switch connected to a telephone network of a telephone company. The management device 10₁ may have a function as a gateway device or an inter-gateway switch.

The base station 20 and the base station 40 illustrated in FIG. 3 are both non-terrestrial station devices such as satellite stations and aircraft stations. A group of satellite stations (or a single satellite station) constituting the non-terrestrial network is called a spaceborne platform. In addition, a group of aircraft stations (or a single aircraft station) constituting the non-terrestrial network is called an airborne platform. In the example of FIG. 3, the base station 20₂, the base station 40₁, and the base station 40₂ constitute a spaceborne platform SBP1, and the base station 20₁ constitutes a spaceborne platform SBP2. In addition, a base station 20₃ constitutes an airborne platform ABP1.

The terminal device 50 can communicate with both the base station 30 and the base station 20. In the example of FIG. 3, the terminal device 50₁ can communicate with the base station 30 that constitutes the terrestrial network TN1. In addition, the terminal device 50₁ can communicate with the base stations 20 that constitute the spaceborne platforms SBP1 and SBP2. In addition, the terminal device 50₁ can also communicate with the base station 20 that constitutes the airborne platform ABP1. Note that the terminal device 50₁ may be capable of directly communicating with another terminal device 50 (the terminal device 50₂ in the example of FIG. 3).

The base station 20 is connected to the terrestrial network or the core network via a relay station 60. The base stations 20 constituting the spaceborne platforms SBP1 and SBP2 are connected to the terrestrial network TN1 via a relay station 60₁. In addition, the base stations 20 constituting the spaceborne platforms SBP1 and SBP2 and the airborne platform ABP1 are connected to the core network CN via a relay station 60₂. Note that the base stations 20 can directly communicate with the other base stations 20 without the intervention of the relay station 60.

The relay station 60 is, for example, an aviation station or an earth station. An aviation station is a radio station installed on the ground or a moving body that moves on the ground to communicate with an aircraft station. In addition, the earth station is a radio station located on the earth (including the air) to communicate with a satellite station (space station). The earth station may be a large earth station or a small earth station such as a very-small-aperture terminal (VSAT). Note that the earth station may be a VSAT control earth station (also referred to as a parent station or HUB station) or a VSAT earth station (also referred to as a child station). In addition, the earth station may be a radio station installed in a moving body that moves on the ground. Examples of the earth station mounted on a ship include earth stations on board vessels (ESV). In addition, the earth station may include an aircraft earth station, which is installed in an aircraft (including a helicopter) and communicates with a satellite station. In addition, the earth station may include an aviation earth station, which is installed in a moving body that moves on the ground and communicates with an aircraft earth station via a satellite station. Note that the relay station 60 may be a portable and movable radio station that communicates with a satellite station or an aircraft station. The relay station 60 can be considered as a part of the communication system 1.

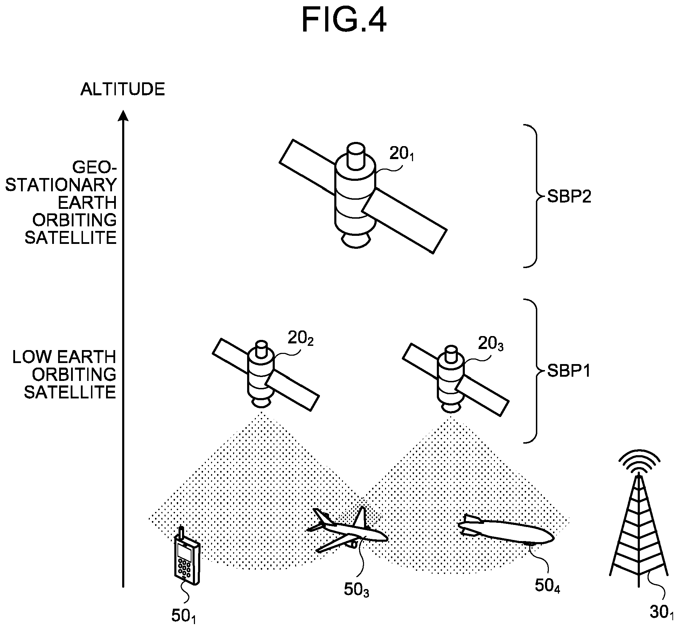

The respective devices constituting the spaceborne platforms SBP1 and SBP2 perform satellite communication with the terminal device 50. The satellite communication refers to wireless communication between a satellite station and the terminal device 50. FIG. 4 is a diagram illustrating an overview of the satellite communication provided by the communication system 1. The satellite station is mainly divided into a geostationary earth orbiting satellite station and a low earth orbiting satellite station.

The geostationary earth orbiting satellite station is located at an altitude of approximately 35,786 km and revolves around the earth at the same speed as the earth's rotation speed. In the example of FIG. 4, the base station 20₁ that constitutes the spaceborne platform SBP2 is a geostationary earth orbiting satellite station. The geostationary earth orbiting satellite station has a relative velocity of approximately zero with the terminal device 50 on the ground and appears stationary when observed from the terminal device 50 on the ground. The base station 20₁ performs satellite communication with the terminal devices 50₁, 50₃, 50₄, and the like located on the earth.

A low earth orbiting satellite station is a satellite station that orbits at a lower altitude than a geostationary earth orbiting satellite station or a medium earth orbiting satellite station. The low earth orbiting satellite station is, for example, a satellite station located between altitudes of 500 km and 2000 km. In the example of FIG. 4, the base stations 20₂ and 20₃ that constitute the spaceborne platform SBP1 are low earth orbiting satellite stations. Note that FIG. 4 illustrates only the two base stations 20₂ and 20₃ as satellite stations constituting the spaceborne platform SBP1. In practice, however, the satellite stations constituting the spaceborne platform SBP1, however, are two or more (e.g. tens to thousands) base stations 20 which constitute a low earth orbiting satellite constellation. The low earth orbiting satellite station has a relative velocity with respect to the terminal device 50 on the ground unlike the geostationary earth orbiting satellite station and appears to be moving when observed from the terminal device 50 on the ground. The base stations 20₂ and 20₃ form cells, respectively, and perform satellite communication with the terminal devices 50₁, 50₂, 50₃, and the like located on the earth.

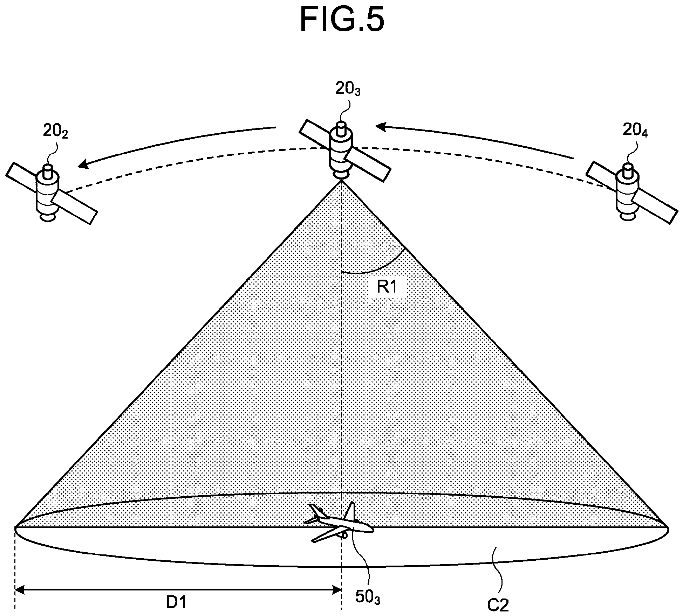

FIG. 5 is a diagram illustrating an example of a cell formed by a satellite station. FIG. 5 illustrates the cell C2 formed by the base station 20₃ which is the low earth orbiting satellite station. The satellite station that orbits a low earth orbit communicates with the terminal device 50 on the ground with a predetermined directivity on the ground. For example, an angle R1 illustrated in FIG. 5 is 40°. In the case of FIG. 5, a radius D1 of the cell C2 formed by the base station 20₃ is, for example, 1000 km. The low earth orbiting satellite station moves at a constant speed. In the case where the low earth orbiting satellite station is difficult to provide satellite communication to the terminal device 50 on the ground, the subsequent low earth orbiting satellite station provides satellite communication. In the case of the example in FIG. 5, when it is difficult for the base station 20₃ to provide satellite communication to the terminal device 50 on the ground, a subsequent base station 20₄ provides satellite communication. Note that the values of the angle R1 and the radius D1 described above are merely examples and are not limited thereto.

As described above, the terminal device 50 can perform wireless communication using the non-terrestrial network. In addition, the base station 20 and the base station 40 of the communication system 1 constitute the non-terrestrial network. As a result, the communication system 1 can extend the service even to the terminal device 50 located in the area that is hardly covered by the terrestrial network. For example, the communication system 1 is capable of providing public safety communication and critical communication for the terminal device 50 such as Internet of things (IoT) devices and machine-type communications (MTC) devices. In addition, the use of the non-terrestrial network improves service reliability and recovery, and thus, the communication system 1 can reduce the vulnerability of the service to a physical attack or a natural disaster. In addition, the communication system 1 can implement service connection to aircraft terminal devices such as passengers of airplanes and aerial vehicles and service connection to mobile terminal devices such as ships and trains. In addition, the communication system 1 can implement the A/V content, group communication, IoT-based broadcast services, software download services, high-performance multicast services such as emergency messages, high-performance broadcast services, and the like. Furthermore, the communication system 1 can support traffic offload between the terrestrial network and the non-terrestrial network. For the implementation described above, it is desirable that the non-terrestrial network provided by the communication system 1 be operationally integrated with the terrestrial network provided by the communication system 1 in a higher layer, but the invention is not limited thereto. In addition, it is desirable that the non-terrestrial network provided by the communication system 1 have a common radio access scheme with the terrestrial network provided by the communication system 1, but the invention is not limited thereto.

Next, configurations of the respective devices constituting the communication system 1 according to the present embodiment will be described in detail.

### <2-2. Configuration of Management Device>

The management device 10 is a device that manages a wireless network. For example, the management device 10 is a device that manages communication between the base station 20 and the base station 30. If the core network is EPC, the management device 10 is, for example, a device having a function as a mobility management entity (MME). In addition, if the core network is 5GC, the management device 10 is, for example, a device having a function as an access and mobility management function (AMF). Note that the management device 10 may have a gateway function. For example, if the core network is EPC, the management device 10 may have a function as a serving-gateway (S-GW) or a packet data network gateway (P-GW). In addition, if the core network is 5GC, the management device 10 may have a function as a user plane function (UPF). Note that the management device 10 is not necessarily a device that constitutes the core network. For example, if the core network is a W-CDMA or cdma2000 core network, the management device 10 may be a device that functions as a radio network controller (RNC).

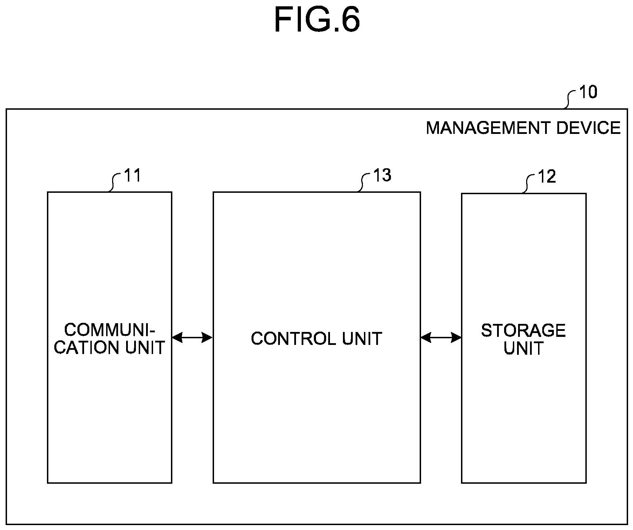

FIG. 6 is a diagram illustrating a configuration example of the management device 10 according to the embodiment of the present disclosure. The management device 10 includes a communication unit 11, a storage unit 12, and a control unit 13. Note that the configuration illustrated in FIG. 6 is a functional configuration, and its hardware configuration may be different from the illustrated one. In addition, functions of the management device 10 may be implemented in the form distributed in a plurality of physically separated components. For example, the management device 10 may be constituted by a plurality of server devices.

The communication unit 11 is a communication interface configured to communicate with other devices. The communication unit 11 may be a network interface or a device connection interface. For example, the communication unit 11 may be a local area network (LAN) interface such as a network interface card (NIC) or may be a universal serial bus (USB) interface including a USB host controller, a USB port, and the like. In addition, the communication unit 11 may be a wired interface or a wireless interface. The communication unit 11 functions as a communication means of the management device 10. The communication unit 11 communicates with the base station 30 or the relay station 60 under the control of the control unit 13.

The storage unit 12 is a data readable/writable storage device, such as a dynamic random access memory (DRAM), a static random access memory (SRAM), a flash memory, and a hard disk. The storage unit 12 functions as a storage means of the management device 10. The storage unit 12 stores, for example, a connected state of the terminal device 50. For example, the storage unit 12 stores a state of radio resource control (RRC) and a state of EPS connection management (ECM) of the terminal device 50. The storage unit 12 may function as a home memory that stores position information of the terminal device 50.

The control unit 13 is a controller that controls the respective units of the management device 10. The control unit 13 is realized by a processor such as a central processing unit (CPU) and a micro-processing unit (MPU). For example, the control unit 13 is realized as the processor executes various programs stored in the storage device inside the management device 10 using a random access memory (RAM) or the like as a work area. Note that the control unit 13 may be realized by an integrated circuit such as an application-specific integrated circuit (ASIC) and a field-programmable gate arrays (FPGA). All the CPU, MPU, ASIC, and FPGA can be regarded as controllers.

### <2-3. Configuration of Base Station>

Next, the configuration of the base station will be described. The communication system 1 includes the base station 20, the base station 30, and the base station 40 as base stations. All the base stations 20 to 40 may be movable. Hereinafter, the configuration of the base station 20 will be described as the configuration of the base station. Note that the configurations of the base station 30 and the base station 40 may be the same as the configuration of the base station 20 to be illustrated hereinafter.

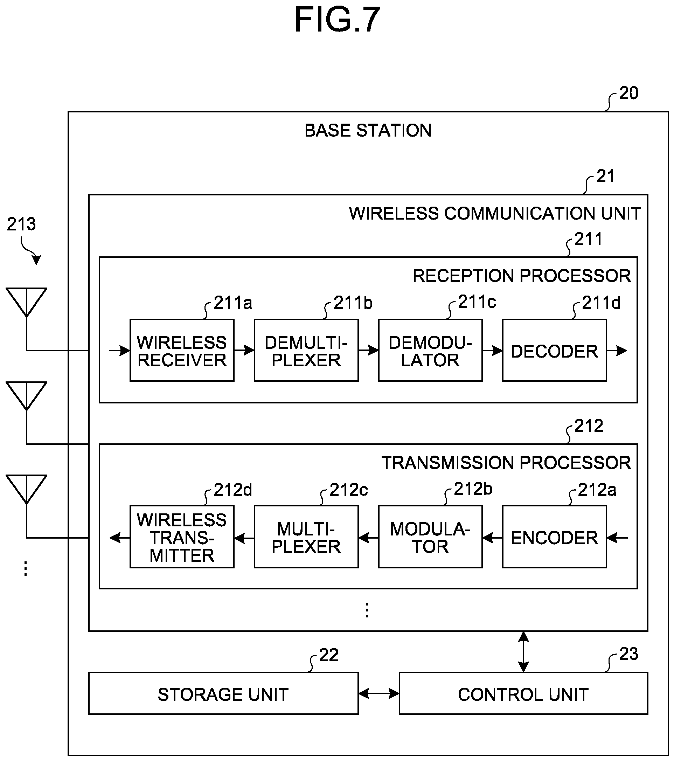

FIG. 7 is a diagram illustrating a configuration example of the base station 20 according to the embodiment of the present disclosure. The base station 20 includes a wireless communication unit 21, a storage unit 22, and a control unit 23. Note that the configuration illustrated in FIG. 7 is a functional configuration, and its hardware configuration may be different from the illustrated one. In addition, functions of the base station 20 may be implemented in the form distributed in a plurality of physically separated components.

The wireless communication unit 21 is a wireless communication interface that wirelessly communicates with other wireless terminal devices (e.g. the terminal device 50 and the relay station 60). The wireless communication unit 21 supports one or a plurality of radio access schemes. For example, the wireless communication unit 21 supports both NR and LTE. The wireless communication unit 21 may support W-CDMA or cdma2000 in addition to NR and LTE. The wireless communication unit 21 includes a reception processor 211, a transmission processor 212, and an antenna 213. The wireless communication unit 21 may include a plurality of reception processors 211, transmission processors 212, and antennas 213. Note that the respective units of the wireless communication unit 21 can be configured to support individually for each radio access scheme when the wireless communication unit 21 supports a plurality of radio access schemes. For example, the reception processor 211 and the transmission processor 212 may be configured to support individually for LTE and NR.

The reception processor 211 processes an uplink signal received via the antenna 213. The reception processor 211 includes a wireless receiver 211a, a demultiplexer 211b, a demodulator 211c, and a decoder 211d.

The wireless receiver 211a down-converts an uplink signal, removes an unnecessary frequency component, controls an amplification level, performs orthogonal demodulation, performs conversion to a digital signal, removes a guard interval, extracts a frequency domain signal using fast Fourier transform, or the like. The demultiplexer 211b separates the signal output from the wireless receiver 211a into an uplink channel, such as a physical uplink shared channel (PUSCH) and a physical uplink control channel (PUCCH), and an uplink reference signal. The demodulator 211c demodulates a received signal using a modulation scheme such as binary phase shift keying (BPSK) and quadrature phase shift keying (QPSK) for a modulated symbol of the uplink channel. The modulation scheme used by the demodulator 211c may be 16-quadrature amplitude modulation (QAM), 64QAM, 256QAM, or the like. The decoder 211d performs decoding processing on demodulated coded bits of the uplink channel. The decoded uplink data and uplink control information are output to the control unit 23.

The transmission processor 212 performs transmission processing of downlink control information and downlink data. The transmission processor 212 includes an encoder 212a, a modulator 212b, a multiplexer 212c, and a wireless transmitter 212d.

The encoder 212a encodes the downlink control information and downlink data input from the control unit 23 using an encoding scheme such as block encoding, convolutional encoding, and turbo encoding. The modulator 212b modulates coded bits output from the encoder 212a by using a predetermined modulation scheme such as BPSK, QPSK, 16QAM, 64QAM, and 256QAM. The multiplexer 212c multiplexes a modulated symbol and a downlink reference signal on each channel and arranges the multiplexed modulated symbol and downlink reference signal in a predetermined resource element. The wireless transmitter 212d performs various types of signal processing on the signal from the multiplexer 212c. For example, the wireless transmitter 212d performs processing such as conversion into the time domain by fast Fourier transform, addition of a guard interval, generation of a baseband digital signal, conversion into an analog signal, quadrature modulation, up-conversion, removal of extra frequency components, and power amplification. The signal generated by the transmission processor 212 is transmitted through the antenna 213.

The storage unit 22 is a data readable/writable storage device such as a DRAM, an SRAM, a flash memory, and a hard disk. The storage unit 22 functions as a storage means of the base station 20. The storage unit 22 stores switching information. The switching information is information used by the terminal device 50 to switch the base station. Examples of the switching information include information such as resource information, trigger information, timing advance information, and the like.

The resource information is information relating to a radio resource used by the connected terminal device 50 to perform wireless communication with the base station which is a switching destination candidate configured to be movable. In addition, the trigger information is information used by the terminal device 50 to determine whether to switch the base station which is a connection destination. In addition, the timing advance information is information relating to timing advance for connection of the terminal device 50 with the base station which is a switching destination candidate. The resource information, trigger information, and timing advance information will be described in detail later.

The control unit 23 is a controller that controls the respective units of the base station 20. The control unit 23 is realized by a processor such as a central processing unit (CPU) and a micro-processing unit (MPU). For example, the control unit 23 is realized as the processor executes various programs stored in the storage device inside the base station 20 using a random access memory (RAM) or the like as a work area. Note that the control unit 23 may be realized by an integrated circuit such as an application-specific integrated circuit (ASIC) and a field-programmable gate array (FPGA). All the CPU, MPU, ASIC, and FPGA can be regarded as controllers.

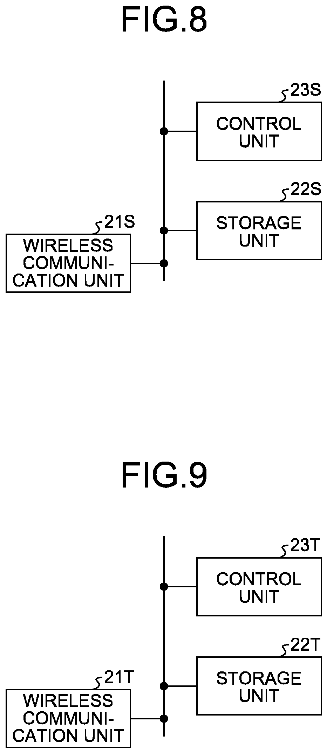

Note that the base station 20 can also be configured as illustrated in FIGS. 8 and 9. FIG. 8 is a configuration example of the base station 20S illustrated in FIG. 1, and FIG. 9 is a configuration example of the base station 20T illustrated in FIG. 1. Both the base station 20S and base station 20T are examples of the base station 20.

The base station 20S illustrated in FIG. 8 includes a wireless communication unit 21S, a storage unit 22S, and a control unit 23S.

When the terminal device 50 belongs to the cell C1 illustrated in FIG. 1, the wireless communication unit 21S receives signals containing the same data repeatedly transmitted from the terminal device 50, performs predetermined wireless reception processing on the received signals, and outputs symbols after the wireless reception processing to the control unit 23S. The control unit 23S synthesizes the symbols after the wireless reception processing between pieces of the same data, and demodulates and decodes the synthesized symbol to obtain the received data.

In addition, the control unit 23S generates continuation information, codes and modulates the generated continuation information, and outputs a modulated symbol to the wireless communication unit 21S. The wireless communication unit 21S performs predetermined wireless transmission processing on the modulated symbol, and transmits a signal after the wireless transmission processing to the terminal device 50.

The base station 20T illustrated in FIG. 9 has a wireless communication unit 21T, a storage unit 22T, and a control unit 23T.

When the terminal device 50 belongs to the cell C2 illustrated in FIG. 1, the wireless communication unit 21T receives signals containing the same data repeatedly transmitted from the terminal device 50, performs predetermined wireless reception processing on the received signals, and outputs symbols after the wireless reception processing to the control unit 23T. The control unit 23T synthesizes the symbols after the wireless reception processing between pieces of the same data, and demodulates and decodes the synthesized symbol to obtain the received data.

In addition, the control unit 23T generates continuation information, codes and modulates the generated continuation information, and outputs a modulated symbol to the wireless communication unit 21T. The wireless communication unit 21T performs predetermined wireless transmission processing on the modulated symbol, and transmits a signal after the wireless transmission processing to the terminal device 50.

### <2-4. Configuration of Terminal Device>

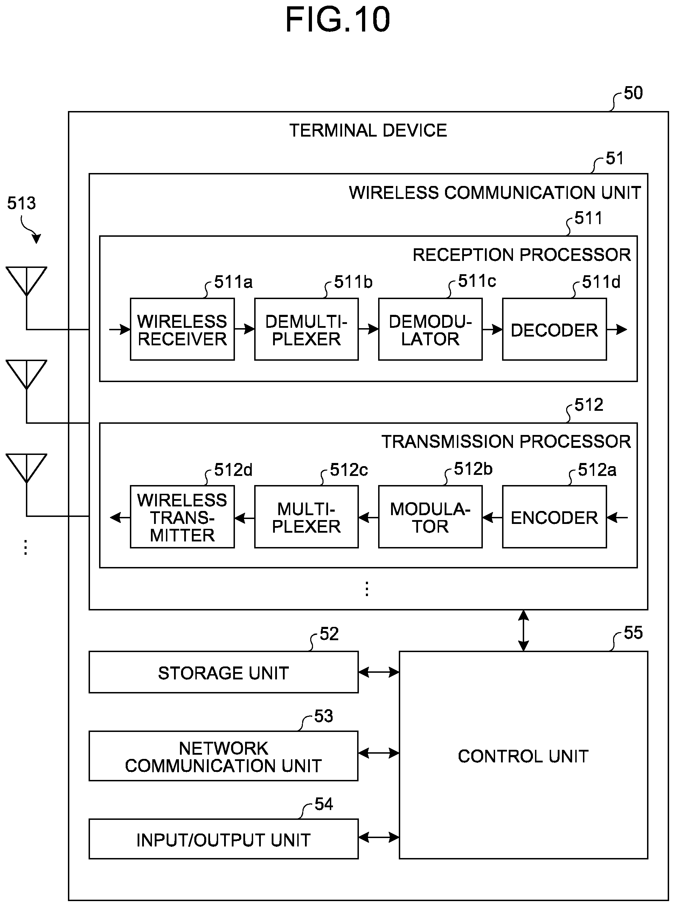

Next, the configuration of the terminal device 50 will be described. FIG. 10 is a diagram illustrating a configuration example of the terminal device 50 according to the embodiment of the present disclosure. The terminal device 50 includes a wireless communication unit 51, a storage unit 52, a network communication unit 53, an input/output unit 54, and a control unit 55. Note that the configuration illustrated in FIG. 10 is a functional configuration, and its hardware configuration may be different from the illustrated one. In addition, functions of the terminal device 50 may be implemented in the form distributed in a plurality of physically separated components. In addition, the configuration illustrated in FIG. 10 is an example, and not all the wireless communication unit 51, the storage unit 52, the network communication unit 53, the input/output unit 54, and the control unit 55 are essential components. For example, at least the network communication unit 53 and the input/output unit 54 are not necessarily essential field components from the viewpoint of the embodiment of the present disclosure.

The wireless communication unit 51 is a wireless communication interface that performs wireless communication with other wireless communication devices (e.g. the base stations 20, 30, and 40). The wireless communication unit 51 supports one or a plurality of radio access schemes. For example, the wireless communication unit 51 supports both NR and LTE. The wireless communication unit 51 may support W-CDMA or cdma2000 in addition to NR and LTE. The wireless communication unit 51 includes a reception processor 511, a transmission processor 512, and an antenna 513. The wireless communication unit 51 may include a plurality of reception processors 511, transmission processors 512, and antennas 513. Note that the respective units of the wireless communication unit 51 can be configured to support individually for each radio access scheme when the wireless communication unit 51 supports a plurality of radio access schemes. For example, the reception processor 511 and the transmission processor 512 may be configured to support individually for LTE and NR.

The wireless communication unit 51 receives a signal including information (hereinafter sometimes referred to as "continuation information") regarding continuation of repetition transmission before handover and repetition transmission after the handover (that is, continuation of the repetition transmission before and after the handover) from the base station 20. The wireless communication unit 51 performs predetermined wireless reception processing on the received signal, and outputs a symbol after the wireless reception processing to the control unit 55. The control unit 55 may acquire the continuation information by demodulating and decoding the symbol after the wireless reception processing.

The reception processor 511 processes a downlink signal received via the antenna 513. The reception processor 511 includes a wireless receiver 511a, a demultiplexer 511b, a demodulator 511c, and a decoder 511d.

The wireless receiver 511a down-converts a downlink signal, removes an unnecessary frequency component, controls an amplification level, performs orthogonal demodulation, performs conversion to a digital signal, removes a guard interval, extracts a frequency domain signal using fast Fourier transform, or the like. The demultiplexer 511b separates a signal output from the wireless receiver 511a into a downlink channel, a downlink synchronization signal, and a downlink reference signal. The downlink channel is a channel such as a physical broadcast channel (PBCH), a physical downlink shared channel (PDSCH), and a physical downlink control channel (PDCCH). The demodulator 211c demodulates a received signal using a modulation scheme such as BPSK, QPSK, 16QAM, 64QAM, and 256QAM, for a modulated symbol on a downlink channel. The decoder 511d performs decoding processing on a demodulated coded bits on a downlink channel. The decoded downlink data and downlink control information are output to the control unit 23.

The transmission processor 512 performs transmission processing of uplink control information and uplink data. The transmission processor 512 includes an encoder 512a, a modulator 512b, a multiplexer 512c, and a wireless transmitter 512d.

The encoder 512a encodes the uplink control information and uplink data input from the control unit 55 using an encoding scheme such as block encoding, convolutional encoding, and turbo encoding. The modulator 512b modulates the coded bits output from the encoder 512a by using a predetermined modulation scheme such as BPSK, QPSK, 16QAM, 64QAM, and 256QAM. The multiplexer 512c multiplexes a modulated symbol and uplink reference signal on each channel and arranges the multiplexed modulated symbol and downlink reference signal in a predetermined resource element. The wireless transmitter 512d performs various types of signal processing on the signal from the multiplexer 512c. For example, the wireless transmitter 512d performs processing such as conversion into the time domain by inverse fast Fourier transform, addition of a guard interval, generation of a baseband digital signal, conversion into an analog signal, quadrature modulation, up-conversion, removal of extra frequency components, and power amplification. A signal generated by the transmission processor 512 is transmitted through the antenna 513.

The storage unit 52 is a data readable/writable storage device such as a DRAM, an SRAM, a flash memory, and a hard disk. The storage unit 52 functions as a storage means of the terminal device 50. The storage unit 52 stores switching information. The switching information is information acquired from the base station 20, 30, or 40, and is used by the terminal device 50 to switch the base station. Examples of the switching information include information such as resource information, trigger information, timing advance information, and the like. The resource information, trigger information, and timing advance information will be described in detail later.

The network communication unit 53 is a communication interface for communicating with other devices. For example, the network communication unit 53 is a LAN interface such as NIC. The network communication unit 53 may be a wired interface or a wireless interface. The network communication unit 53 functions as a network communication means of the terminal device 50. The network communication unit 53 communicates with other devices under the control of the control unit 55.

The input/output unit 54 is a user interface for exchanging information with a user. For example, the input/output unit 54 is an operation device such as a keyboard, a mouse, operation keys, and a touch panel for the user to perform various operations. Alternatively, the input/output unit 54 is a display device such as a liquid crystal display (LCD) and an organic electroluminescence (EL) display. The input/output unit 54 may be an audio device such as a speaker and a buzzer. In addition, the input/output unit 54 may be a lighting device such as a light-emitting diode (LED) lamp. The input/output unit 54 functions as an input/output means (an input means, an output means, an operation means, or a notification means) of the terminal device 50.

The control unit 55 is a controller that controls the respective units of the terminal device 50. The control unit 55 is realized by a processor such as a CPU and an MPU. For example, the control unit 55 is realized as the processor executes various programs stored in the storage device inside the terminal device 50 using a RAM or the like as a work area. Note that the control unit 55 may be realized by an integrated circuit such as an ASIC and an FPGA. All the CPU, MPU, ASIC, and FPGA can be regarded as controllers.

Note that, if data to be transmitted to the base station 20 (hereinafter, sometimes referred to as "transmission data") is generated, the control unit 55 may temporarily cause the storage unit 52 to store the transmission data in order to repeatedly transmit the transmission data. The control unit 55 may repeatedly read the same transmission data from the storage unit 52, code and modulate the read transmission data, and output a modulated symbol to the wireless communication unit 51. The wireless communication unit 51 may perform predetermined wireless transmission processing on the modulated symbol and transmit a signal after the wireless transmission processing to the base station 20.

### <3. Processing in Communication System>

Hereinafter, Processing Examples 1 to 8 will be described as examples of processing in the communication system. Hereinafter, a case where the base station 20S is a wireless communication base station as a handover source and the base station 20T is a wireless communication base station as a handover destination will be described as an example.

### <Processing Example 1>

In Processing Example 1, the control unit 23S of the base station 20S as the handover source dynamically or quasi-statically notifies the terminal device 50 of information (hereinafter, sometimes referred to as "candidate information") regarding a base station which is a candidate as the handover destination including the base station 20T (hereinafter, sometimes referred to as a "candidate base station") before handover. Dynamic notifications include a notification using DCI, and quasi-static notifications include notifications using system information and RRC signaling. The control unit 55 of the terminal device 50 performs repetition transmission based on the notified candidate information. Since a plurality of satellite base stations move in predetermined orbits at regular intervals, the terminal device 50 that has received the candidate information can infer a satellite base station to which the terminal device 50 is likely to be connected in the future.

Note that, in a case where there are a plurality of candidate base stations, the control unit 23S may notify the terminal device 50 of information on the plurality of candidate base stations as candidate information.

In addition, the control unit 23S may include information on a connection order in the candidate information in the case where the plurality of candidate base stations exist.

In addition, the control unit 23S may include information on an association between the candidate base station and a transmission timing on the uplink in the candidate information. For example, the control unit 23S may cause the candidate information to include information that the terminal device 50 is to be connected to a satellite base station A among the candidate base stations when the terminal device 50 transmits data after a lapse of five seconds or that the terminal device 50 is to be connected to a satellite base station B among the candidate base stations when the terminal device 50 transmits data after a lapse of ten seconds.

In addition, the candidate information may include, for example, at least one of pieces of the following information 1 to 13.
Information 1: PRACH transmission resource of candidate base station
Information 2: PRACH transmission preamble sequence of candidate base station
Information 3: Cell ID of candidate base station
Information 4: Carrier frequencies of uplink and downlink of candidate base station
Information 5: Bandwidth of candidate base station
Information 6: Terminal identification ID (C-RNTI) of terminal device 50 after handover
Information 7: Radio resource configuration after handover
Information 8: Condition for updating information set regarding handover
Information 9: Trigger information for performing handover
Information 10: Timing advance information of candidate base station
Information 11: SSB index of candidate base station Information 12: Information on transmission weight
Information 13: information on skipping random access procedure

### <Processing Example 2>

In Processing Example 2, the control unit 23T of the base station 20T as the handover destination notifies the terminal device 50 of information (hereinafter, sometimes referred to as "same data request information") requesting the terminal device 50 to transmit data which is the same as data, which has been transmitted to the base station 20S before handover, to the base station 20T after the handover as continuation information after the handover. The control unit 55 of the terminal device 50 transmits the same data as the data, which has been transmitted to the base station 20S before the handover, to the base station 20T after the handover and continues the repetition transmission based on the same data request information notified after the handover.

The control unit 23T may quasi-statically notify the terminal device 50 of the same data request information using RRC signaling, system information, or the like. In addition, the control unit 23T may quasi-statically notify the terminal device 50 of information on whether to transmit the same data as the data, which has been transmitted by the terminal device 50 before the handover, after the handover.

In addition, the control unit 23T may notify the terminal device 50 of an HARQ process number as the same data request information. The control unit 55 notified of the HARQ process number transmits the same data as the data, which has been transmitted before the handover, after the handover only for the notified HARQ process number. The HARQ process number is sometimes referred to as an HARQ process ID or an HARQ ID.

Note that the control unit 23T may notify only any one of an HARQ process number before handover and an HARQ process number after handover or may notify both the HARQ process number before the handover and the HARQ process number after the handover. The control unit 23T receives the HARQ process number before the handover from the base station 20S before the handover.

In addition, the control unit 23T may notify the same data request information using DCI. When the control unit 23T notifies the same data request information using DCI, a new notification field may be provided in DCI. For example, the control unit 23T notifies the terminal device 50 of whether the terminal device 50 transmits the same data as the data, which has been transmitted by the terminal device 50 before the handover, after the handover using a 1-bit notification field. For example, the terminal device 50 is requested to transmit the same data as that before the handover after the handover when "1" is notified in the notification field, and the terminal device 50 is requested to transmit new data different from that before the handover after the handover when "0" is notified in the notification field. The control unit 55 of the terminal device 50 requested to transmit the same data as that before the handover after the handover refers to an HARQ process number notified in another field from the control unit 23T, for example, and transmits the same data as the data of the HARQ process number before handover after the handover using the notified HARQ process number.

Further, for example, the control unit 23T may use a plurality of bits to notify which HARQ process number before handover is to be continued. For example, when being notified of "0001" as an HARQ process number, the control unit 55 continuously uses the HARQ process number of "0001" before handover to continue the repetition transmission.

In addition, an HARQ process number to be used after handover may be different from an HARQ process number used before the handover. For example, when the HARQ process number used before the handover is "0001", the repetition transmission may be continued with an HARQ process number of "0010" after the handover.

In addition, one of a plurality of bits of DCI may be used as a flag as to whether to continue transmission of the same data as transmission data before handover.

In addition, the control unit 23T may notify the same data request information using a new data indicator (NDI). For example, when being notified to continue transmission of the same data after handover, the HARQ process numbers before and after the handover are the same, and the NDI indicates retransmission, the control unit 55 continues the repetition transmission after the handover with the same data as data that has been repeatedly transmitted before the handover.

In addition, the control unit 55 may repeatedly transmit the same data as that before handover after the handover when an HARQ process number used for repetition transmission before the handover and an HARQ process number notified from the control unit 23T after the handover are the same. In DCI, which HARQ process data is being transmitted is notified in an area of the HARQ process number. In addition, for example, the control unit 55 continues the repetition transmission of the same data after handover when being notified to continuously transmit the same data as data, which has been transmitted before the handover, after the handover by RRC signaling or the like and the transmission of the data, which has been transmitted before the handover, has not completed with the notified HARQ process number.

### <Processing Example 3>

In Processing Example 3, the control unit 23S of the base station 20S as the handover source notifies the terminal device 50 of the same data request information as the continuation information before handover. The control unit 55 of the terminal device 50 transmits the same data as the data, which has been transmitted to the base station 20S before the handover, to the base station 20T after the handover and continues the repetition transmission based on the same data request information notified before the handover. Since the same data request information is notified to the terminal device 50 in advance before the handover in this manner, the control unit 55 does not erase the transmission data temporarily stored in the storage unit 52 from the storage unit 52 even if the handover occurs. For this reason, the control unit 55 can continue the repetition transmission without generating the same data again when repeatedly transmitting the same data before the handover after the handover. Thus, a processing load of the terminal device 50 can be reduced.

The control unit 23S may quasi-statically notify the terminal device 50 of the same data request information using RRC signaling, system information, or the like. In addition, the control unit 23S may quasi-statically notify the terminal device 50 of information on whether to transmit the same data as data, which has been transmitted by the terminal device 50 before handover, after the handover when the terminal device 50 has not completed the transmission of the data being transmitted to the base station 20S but the handover occurs.

In addition, the control unit 23S may notify the terminal device 50 of an HARQ process number as the same data request information. The control unit 55 notified of the HARQ process number transmits the same data as data, which has been transmitted before handover, after the handover only for the notified HARQ process number when the transmission of the data being transmitted to the base station 20S has not been completed but the handover occurs.

In addition, the control unit 23S may notify the same data request information using DCI. When the control unit 23S notifies the same data request information using DCI, a new notification field may be provided in DCI. For example, the control unit 23S may notify the terminal device 50 of whether the terminal device 50 transmits the same data as data, which has been transmitted by the terminal device 50 before handover, after the handover using a 1-bit notification field when the terminal device 50 has not completed the transmission of the data being transmitted to the base station 20S but the handover occurs. For example, the terminal device 50 is requested to transmit the same data as that before the handover after the handover when "1" is notified in the notification field, and the terminal device 50 is requested to transmit new data different from that before the handover after the handover when "0" is notified in the notification field. The control unit 55 of the terminal device 50 requested to transmit the same data as that before the handover after the handover refers to an HARQ process number notified in another field from the control unit 23S, for example, and transmits the same data as the data of the HARQ process number before handover after the handover using the notified HARQ process number.

In addition, the control unit 23S may notify the same data request information using a MAC control element (CE) .

### <Processing Example 4>

In Processing Example 4, the control unit 55 of the terminal device 50 transmits data for repetition transmission based on a configured grant. If handover occurs during the repetition transmission based on the configured grant, the control unit 55 repeats the transmission of the same data as that before the handover even after the handover. In addition, after the handover, the control unit 55 hands over the number of times the repetition transmission before the handover has already been transmitted.

In addition, the control unit 23S of the base station 20S notifies the terminal device 50 of a configured grant configuration after handover in advance before the handover. Since the terminal device 50 is notified of the configured grant configuration after the handover by the control unit 23S in advance before the handover in this manner, it is unnecessary for the control unit 23T to notify the terminal device 50 of the configured grant configuration after the handover, and thus, the terminal device 50 can continue data transmission immediately after the handover. The configured grant configuration notified to the terminal device 50 before the handover includes cell ID information of the cell C2, which is a handover destination cell, and synchronization signal block (SSB) index information of the cell C2.

### <Processing Example 5>

The distance between the terminal device 50 and the base station 20 does not change as the base station 20 moves but is substantially constant or predictable, and thus, a random access procedure performed for uplink synchronization can be omitted (skipped) after handover. Therefore, in Processing Example 5, the control unit 55 of the terminal device 50 performs the random access procedure with the base station 20S as the handover source, but does not perform the random access procedure with the base station 20T as the handover destination. That is, after the handover, the control unit 55 starts data transmission to the base station 20T without performing the random access procedure. In addition, regarding timing advance, the control unit 55 preferably continue to use a value, which has been used for communication with the base station 20S before the handover, after the handover or to use a value acquired based on information notified in advance regarding timing advance when starting the data transmission to the base station 20T without performing the random access procedure. In addition, after the handover, the control unit 55 hands over a transmission power value before the handover and controls the transmission power after the handover.

### <Processing Example 6>

The control unit 23S of the base station 20S as the handover source transmits, for example, a request for registration of a candidate base station (hereinafter, sometimes referred to as a "candidate registration request"), a request for execution of handover (hereinafter sometimes referred to as a "handover request"), synthesized data before handover, and the like to the base station 20T as the handover destination in advance before the handover. In addition, the control unit 23S may notify the base station 20T as the handover destination of an HARQ process number, the number of times of transmission of the same data executed before the handover, a terminal identification ID such as C-RNTI, setting values required to generate a scrambling sequence (e.g. data scrambling identity PUSCH, data scrambling identity PDSCH, and the like), a physical layer cell identity, and the like in advance before the handover such that the terminal device 50 can continuously transmit the same data as that before the handover to the base station 20T after the handover.

On the other hand, the control unit 23T of the base station 20T as the handover destination transmits, for example, ACK or NACK for the candidate registration request and ACK or NACK for the handover request to the base station 20S.

### <Processing Example 7>

In Processing Example 7, the number of times of transmission of the same data in repetition transmission is determined by the terminal device 50 or the base station 20 based on an antenna gain of the terminal device 50, an antenna gain of the base station 20, the distance between the terminal device 50 and the base station 20, the amount of interference around the terminal device 50, the amount of interference around the base station 20, and the like. For example, the control units 23T and 23S may determine the number of times of transmission of the same data in the repetition transmission based on capability information of the terminal device 50 notified from the terminal device 50, position information of the terminal device 50, and the like, and notify the terminal device 50 of the determined number of times of transmission. In addition, the control unit 23T may cause the control unit 55 to stop the repetition transmission when synthesized data is successfully decoded in the repetition transmission continued after the handover. The control unit 23T may transmit ACK to the terminal device 50 or grant of next transmission data to notify the terminal device 50 that the synthesized data has been successfully decoded.

### <Processing Example 8>

In data transmission performed by the terminal device 50 and data reception performed by the base station 20, scrambling or descramble processing is performed using a terminal identification ID (e.g. C-RNTI) given to the terminal device 50. If the terminal identification ID given to the terminal device 50 is different before and after handover, it becomes difficult to synthesize data after the handover with synthesized data before the handover. Therefore, in Processing Example 8, the control unit 23S of the base station 20S notifies the base station 20T of the terminal identification ID given to the terminal device 50 in repetition transmission before the handover. Then, the control unit 23T of the base station 20T performs data synthesis in the repetition transmission after the handover using the terminal identification ID notified from the base station 20S, that is, the same terminal identification ID as the terminal identification ID used before the handover. On the other hand, the control unit 55 of the terminal device 50 scrambles data for the repetition transmission using the same terminal identification ID before and after the handover. In addition, when the transmission of the data which has been transmitted before the handover in the repetition transmission has been completed after the handover, the control unit 55 uses a new terminal identification ID given after the handover to transmit new data.

Note that setting values such as data scrambling identity PUSCH and data scrambling identity PDSCH, and/or parameters such as physical layer cell identity may be used in addition to the terminal identification ID in the data transmission performed by the terminal device 50 and the data reception performed by the base station 20. Therefore, these parameters may be used in the same manner as the above-described method of using the terminal identification ID. In addition, parameters required for transmission and reception of data may be used in the same manner as the above-described method of using the terminal identification ID, in addition to the terminal identification ID and these parameters. In addition, processing required for transmission and reception of data is not limited to scrambling and descrambling.

For example, processing loads of the terminal device 50 and the base station 20 at the time of handover can be reduced by dividing a plurality of satellite base stations in the same orbit into a plurality of groups and using the same dedicated terminal identification ID within the same group.

Processing Examples 1 to 8 have been described as above.

### <4. Processing Procedure in Communication System>

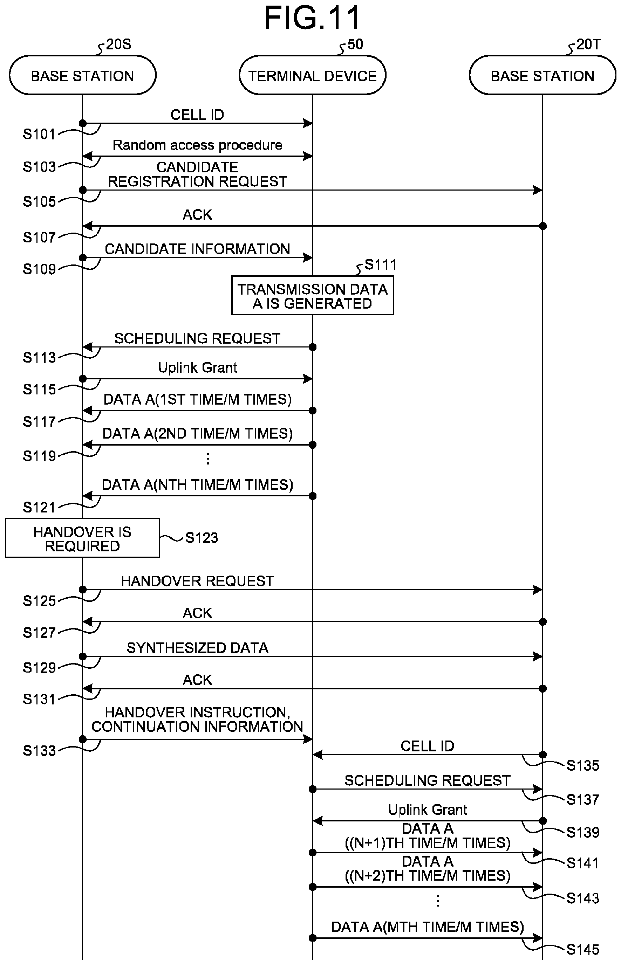

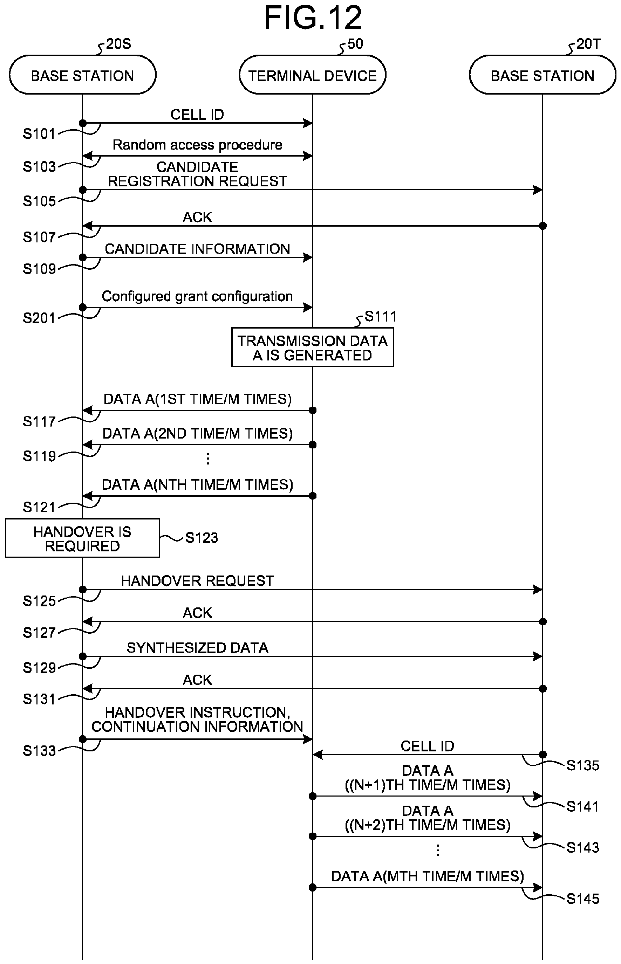

FIGS. 11 and 12 are diagrams illustrating examples of a processing procedure in the communication system according to the embodiment of the present disclosure. Hereinafter, Procedure Example 1 and Procedure Example 2 will be described as the examples of the processing procedure in the communication system.

### <Procedure Example 1 (FIG. 11)>

In FIG. 11, in Step S101, the control unit 23S of the base station 20S establishes downlink synchronization with the terminal device 50 and then transmits a cell ID of the cell C1 to the terminal device 50, and the control unit 55 of the terminal device 50 receives the cell ID of the cell C1.

Next, in Step S103, a random access procedure is performed between the control unit 23S and the control unit 55.

Next, in Step S105, the control unit 23S transmits a candidate registration request to the base station 20T, and the control unit 23T of the base station 20T receives the candidate registration request.

Next, in Step S107, the control unit 23T transmits ACK for the candidate registration request received in Step S105 to the base station 20S, and the control unit 23S receives the ACK.

Next, in Step S109, the control unit 23S receiving the ACK in Step S107 transmits candidate information to the terminal device 50, and the control unit 55 receives the candidate information.

Next, in Step S111, it is assumed that transmission data A is generated in the control unit 55. Therefore, in Step S113, the control unit 55 transmits a scheduling request to the base station 20S, and the control unit 23S receives the scheduling request.

Next, in Step S115, the control unit 23S receiving the scheduling request in Step S113 transmits uplink grant to the terminal device 50, and the control unit 55 receives the uplink grant.

Next, in Steps S117 to S121, the control unit 55 repeatedly transmits the same data A to the base station 20S based on the uplink grant received in Step S115, and the control unit 23S repeatedly receives the data A. Here, the maximum number of times of transmission in the repetition transmission performed by the control unit 55 is set in advance to M times, and the control unit 23S synthesizes N pieces of the data A when the control unit 55 has completed the transmission in the first time to the Nth time in the M times in Steps S117 to S121.

Next, in Step S123, it is assumed that the control unit 23S determines that handover is necessary.

Next, in Step S125, the control unit 23S determining in Step S123 that the handover is necessary transmits a handover request to the base station 20T, and the control unit 23T receives the handover request.

Next, in Step S127, the control unit 23T receiving the handover request in Step S125 transmits ACK for the handover request to the base station 20S, and the control unit 23S receives the ACK.

Next, in Step S129, the control unit 23S receiving the ACK in Step S127 transmits synthesized data in which the N pieces of the data A are synthesized to the base station 20T, and the control unit 23T receives the synthesized data.

Next, in Step S131, the control unit 23T receiving the synthesized data in Step S129 transmits ACK for the synthesized data to the base station 20S, and the control unit 23S receives the ACK.

Next, in Step S133, the control unit 23S receiving the ACK in Step S131 transmits an instruction for handover to the base station 20T and continuation information to the terminal device 50, and the control unit 55 receives the handover instruction and the continuation information. The control unit 55 switches a connection destination of the terminal device 50 from the base station 20S to the base station 20T according to the handover instruction received in Step S133.

Next, in Step S135, the control unit 23T of the base station 20T establishes downlink synchronization with the terminal device 50 and then transmits a cell ID of the cell C2 to the terminal device 50, and the control unit 55 receives the cell ID of the cell C2.

Next, in Step S137, the control unit 55 transmits a scheduling request to the base station 20T, and the control unit 23T receives the scheduling request.

Here, a random access procedure between the control unit 23T and the control unit 55 is not performed between Step S135 and Step S137. That is, the control unit 55 executes the random access procedure with the base station 20S as the handover source (Step S103), but does not execute the random access procedure with the base station 20T as the handover destination.

Next, in Step S139, the control unit 23T receiving the scheduling request in Step S137 transmits uplink grant to the terminal device 50, and the control unit 55 receives the uplink grant.

Next, in Steps S141 to S145, the control unit 55 repeatedly transmits the same data A to the base station 20T based on the continuation information received in Step S133 and the uplink grant received in Step S139, and the control unit 23T repeatedly receives the data A. Since the transmission of the data A has completed up to the Nth time in the M times in Steps S117 to S121, the control unit 55 transmits the data A in the (N+1)th time to the Mth time to the base station 20T in the Steps S141 to S145. Thus, when the control unit 55 has completed the transmission in the (N+1)th time to the Mth time in Steps S141 to S145, the control unit 23T synthesizes M pieces of the data A.

### <Procedure Example 2 (FIG. 12)>

Hereinafter, a different process from Procedure Example 1 will be described, and a description of the same process as Procedure Example 1 will be omitted.

In FIG. 12, a process in Step S201 is added, and the processes in Steps S113, S115, S137, and S139 are deleted as compared with FIG. 11.

In Step S201, the control unit 23S transmits a configured grant configuration of the base station 20S and a configured grant configuration of the base station 20T to the terminal device 50 subsequent to the transmission of the candidate information in Step S109. The control unit 55 of the terminal device 50 receives the configured grant configuration of the base station 20S and the configured grant configuration of the base station 20T.

Then, in Steps S117 to S121, the control unit 55 repeatedly transmits the same data A to the base station 20S based on the configured grant configuration of the base station 20S received in Step S201.

In addition, in Steps S141 to S145, the control unit 55 repeatedly transmits the same data A to the base station 20T based on the configured grant configuration of the base station 20T received in Step S201 and the continuation information received in Step S133.

Procedure Examples 1 and 2 have been described as above.

Note that the disclosed technology is applicable not only to the low earth orbiting satellite base station but also to various wireless communication base stations floating in the atmosphere or out of the atmosphere. For example, an airplane, an aerial vehicle, a balloon, and the like can be described as examples of the wireless communication base stations floating in the atmosphere. In addition, examples of the wireless communication base stations floating outside the atmosphere include a low earth orbiting (LEO) satellite, medium earth orbiting (MEO) satellites, highly elliptical orbiting (HEO) satellites, and the like.

In addition, the disclosed technology can be applied not only to the wireless communication base stations floating in the air or space, but also to wireless communication base stations installed on the ground (hereinafter, sometimes referred to as "terrestrial stations"). For example, when the terminal device 50 moves at a high speed, handover may occur frequently between a plurality of terrestrial stations.

In addition, the disclosed technique can be applied not only when the handover between cells is performed, but also when a beam is changed, a component carrier is changed, a band width part (BWP) is changed, and the like.

### <5. Modifications>

In addition, all or some of the respective processes in the above description in the base station 20S may be realized by causing the control unit 23S to execute programs corresponding to the respective processes. For example, the programs corresponding to respective processes in the above description may be stored in the storage unit 22S, and the programs may be read from the storage unit 22S and executed by the control unit 23S. In addition, the programs may be stored in a program server connected to the base station 20S via an arbitrary network and executed by being downloaded from the program server to the base station 20S or may be stored in a recording medium readable by the base station 20S and executed by being read from the recording medium.

In addition, all or some of the respective processes in the above description in the base station 20T may be realized by causing the control unit 23T to execute programs corresponding to the respective processes. For example, the programs corresponding to respective processes in the above description may be stored in the storage unit 22T, and the programs may be read from the storage unit 22T and executed by the control unit 23T. In addition, the programs may be stored in a program server connected to the base station 20T via an arbitrary network and executed by being downloaded from the program server to the base station 20T, or may be stored in a recording medium readable by the base station 20T and executed by being read from the recording medium.

All or some of the respective processes in the above description in the terminal device 50 may be realized by causing the control unit 55 to execute programs corresponding to the respective processes. For example, the programs corresponding to respective processes in the above description may be stored in the storage unit 52, and the programs may be read from the storage unit 52 and executed by the control unit 55. In addition, the programs may be stored in a program server connected to the terminal device 50 via an arbitrary network and executed by being downloaded from the program server to the terminal device 50 or may be stored in a recording medium readable by the terminal device 50 and executed by being read from the recording medium.

Examples of the recording media readable by the terminal device 50 and the base station 20 include portable storage media such as a memory card, a USB memory, an SD card, a flexible disk, a magneto-optical disk, a CD-ROM, a DVD, and a Blu-ray (registered trademark) disk. In addition, the program is a data processing method described in an arbitrary language or an arbitrary description method, and may be provided in any format such as a source code and a binary code. In addition, the program is not always limited to one that is configured singly, but includes one that is configured and distributed as a plurality of modules and a plurality of libraries, and one that achieves its function in cooperation with separate programs represented by an OS.

In addition, the information processing device (control device) that controls the management device 10, the base stations 20 to 40, and the terminal device 50 of the present embodiment may be realized by a dedicated computer system or a general-purpose computer system.

For example, a communication program used for executing the above operations is stored and delivered in a computer-readable recording medium such as an optical disk, a semiconductor memory, a magnetic tape, and a flexible disk. Then, for example, the information processing device is configured by installing the program in a computer and executing the above-described processing. At this time, the information processing device may be a device (e.g. a personal computer) outside the management device 10, the base stations 20 to 40, and the terminal device 50. In addition, the information processing device may be a device inside the management device 10, the base stations 20 to 40, and the terminal device 50 (e.g. a processor inside the control unit 13, 23, 34, 44, or 55).

In addition, the above-described communication program can be stored in a disk device provided in a server device on a network such as the Internet in such a way to be downloaded to a computer. In addition, the above-described functions can be realized by cooperation between an operating system (OS) and application software. In this case, other parts than OS can be stored in a medium for delivery, or other parts than OS can be stored in the server device and downloaded to a computer.

In addition, among each process described in the above embodiments, all or a part of the processes described as being performed automatically may be manually performed or the processes described as being performed manually can be performed automatically by the known method. In addition, the processing procedures, specific names, and information including various data and parameters illustrated in the above documents and drawings can be arbitrarily changed unless otherwise specified. For example, various information illustrated in each drawing is not limited to the information illustrated.

In addition, each component of each device illustrated is a functional concept, and does not necessarily need to be physically configured as illustrated. That is, the specific form of distribution/integration of each device is not limited to those illustrated in the drawings, and all or a part thereof may be functionally or physically distributed/integrated into arbitrary units according to various loads and usage conditions.

In addition, the above-described embodiments can be appropriately combined within a range that does not contradict processing contents. In addition, the order of the steps illustrated in the flow charts of the above-described embodiment can be changed as appropriate.

In addition, for example, the present embodiment can be also implemented as any configuration that constitutes a device or a system, for example, a processor as system large scale integration (LSI), a module using a plurality of processors, a unit using a plurality of modules, a set obtained by adding other functions to the unit (that is, a partial configuration of a device), or the like.

Note that the system means a set of a plurality of components (devices, modules (parts), and the like) in the present embodiment, and whether all the components exist in the same housing does not matter. Therefore, a plurality of devices housed in separate housings and connected via a network, and a device in which a plurality of modules are housed in one housing are both the systems.

In addition, for example, the present embodiment can have a cloud computing configuration in which one function is shared by a plurality of devices via a network and processed together.

### [Effect of Disclosed Technology]

As described above, a terminal device (the terminal device 50 in the embodiment) according to the present disclosure includes a wireless communication unit (the wireless communication unit 51 in the embodiment) and a control unit (the control unit 55 in the embodiment). A wireless communication module receives continuation information, and the control unit performs repetition transmission after handover based on the received continuation information.

Then, a wireless communication terminal can repeatedly transmit the same data as data which has been repeatedly transmitted before the handover to a wireless communication base station (the base station 20T in the embodiment) as a handover destination after the handover. For this reason, the wireless communication base station as the handover destination can continuously synthesize the same data as data synthesized by a base station as a handover source (the base station 20S in the embodiment). Therefore, high-quality wireless communication can be realized according to the disclosed technology.

Note that the effects described in the present specification are merely examples and are not restrictive of the disclosure herein, and other effects not described herein also can be achieved.

In addition, the present technology can also adopt the following configurations.
(1) A communication device that performs repetition transmission in which predetermined data is repeatedly transmitted, the communication device comprising:
   a wireless communication unit that receives continuation information which is information on continuation of the repetition transmission before and after handover; and
   a control unit that performs the repetition transmission after the handover based on the continuation information.
(2) The communication device according to (1), wherein the predetermined data is data whose data before error correction coding is identical.
(3) The communication device according to (1), wherein
   the predetermined data is data whose data before error correction coding is identical and redundancy version is an identical value.
(4) The communication device according to (1), wherein
   the predetermined data is data whose data before error correction coding is identical and redundancy version is a different value.
(5) The communication device according to (1), wherein
   the wireless communication unit receives, as the continuation information, request information requesting transmission of data identical to the predetermined data, which has been transmitted to a base station device as a handover source before the handover, to a wireless communication base station as a handover destination after the handover.
(6) The communication device according to (5), wherein
   the wireless communication unit receives the request information transmitted from a base station device as a handover source.
(7) The communication device according to (5), wherein
   the wireless communication unit receives the request information transmitted from a base station device as a handover destination.
(8) The communication device according to (1), wherein the wireless communication unit receives candidate information on a base station device, which is a candidate of a handover destination, from a base station device as a handover source, and
   the control unit performs the repetition transmission after the handover based on the candidate information.
(9) The communication device according to (1), wherein
   the wireless communication unit receives a configured grant configuration after the handover from a base station device as a handover source before the handover, and
   the control unit performs the repetition transmission after the handover based on the configured grant configuration.
(10) The communication device according to (1), wherein
   the control unit performs a random access procedure with a base station device as a handover source, but does not perform the random access procedure with a wireless communication base station as a handover destination.
(11) The communication device according to (1), wherein
   the control unit scrambles data of the repetition transmission using a predetermined ID which is identical before and after the handover.
(12) The communication device according to (11), wherein the predetermined ID is a terminal identification ID.
(13) The communication device according to (11), wherein
   the predetermined ID is a value different from a terminal identification ID given by a base station device after the handover.
(14) The communication device according to (11), wherein
   the predetermined ID is information different from a first terminal identification ID given by a base station device before the handover and a second terminal identification ID given by a base station device after the handover.
(15) A base station device that communicates with a terminal device, which performs repetition transmission in which same data is repeatedly transmitted, the base station device comprising:
   a processor that generates continuation information which is information on continuation of the repetition transmission before and after handover; and
   a wireless communication module that transmits the continuation information to the terminal device.
(16) A data transmission method in a communication device that performs repetition transmission in which identical data is repeatedly transmitted, a communication method comprising:
   receiving continuation information which is information on continuation of the repetition transmission before and after handover; and
   performing the repetition transmission after the handover based on the continuation information.
(17) A communication method in a base station device that communicates with a terminal device which performs repetition transmission in which same data is repeatedly transmitted, the communication method comprising:
   generating continuation information which is information on continuation of the repetition transmission before and after handover; and
   transmitting the continuation information to the terminal device.
(18) A program configured to cause a computer, provided in a communication device that performs repetition transmission in which predetermined data is repeatedly transmitted, to execute processes including:
   receiving continuation information which is information on continuation of the repetition transmission before and after handover; and
   performing the repetition transmission after the handover based on the continuation information.
(19) A program configured to cause a computer, provided in a base station device that communicates with a terminal device which performs repetition transmission in which same data is repeatedly transmitted, to execute processes including:
   generating continuation information which is information on continuation of the repetition transmission before and after handover; and
   transmitting the continuation information to the wireless communication terminal.

### Reference Signs List

- 20, 20S, 20T: BASE STATION
- 50: TERMINAL DEVICE
- 21, 21S, 21T, 51: WIRELESS COMMUNICATION UNIT
- 22, 22S, 22T, 52: STORAGE UNIT
- 23, 23S, 23T, 55: CONTROL UNIT

## Claims

1. A communication device that performs repetition transmission in which predetermined data is repeatedly transmitted, the communication device comprising:
a wireless communication unit that receives continuation information which is information on continuation of the repetition transmission before and after handover; and
a control unit that performs the repetition transmission after the handover based on the continuation information.

2. The communication device according to claim 1, wherein
the predetermined data is data whose data before error correction coding is identical.

3. The communication device according to claim 1, wherein
the predetermined data is data whose data before error correction coding is identical and redundancy version is an identical value.

4. The communication device according to claim 1, wherein
the predetermined data is data whose data before error correction coding is identical and redundancy version is a different value.

5. The communication device according to claim 1, wherein
the wireless communication unit receives, as the continuation information, request information requesting transmission of data identical to the predetermined data, which has been transmitted to a base station device as a handover source before the handover, to a wireless communication base station as a handover destination after the handover.

6. The communication device according to claim 5, wherein
the wireless communication unit receives the request information transmitted from a base station device as a handover source.

7. The communication device according to claim 5, wherein
the wireless communication unit receives the request information transmitted from a base station device as a handover destination.

8. The communication device according to claim 1, wherein
the wireless communication unit receives candidate information on a base station device, which is a candidate of a handover destination, from a base station device as a handover source, and
the control unit performs the repetition transmission after the handover based on the candidate information.

9. The communication device according to claim 1, wherein
the wireless communication unit receives a configured grant configuration after the handover from a base station device as a handover source before the handover, and
the control unit performs the repetition transmission after the handover based on the configured grant configuration.

10. The communication device according to claim 1, wherein
the control unit performs a random access procedure with a base station device as a handover source, but does not perform the random access procedure with a wireless communication base station as a handover destination.

11. The communication device according to claim 1, wherein
the control unit scrambles data of the repetition transmission using a predetermined ID which is identical before and after the handover.

12. The communication device according to claim 11, wherein
the predetermined ID is a terminal identification ID.

13. The communication device according to claim 11, wherein
the predetermined ID is a value different from a terminal identification ID given by a base station device after the handover.

14. The communication device according to claim 11, wherein
the predetermined ID is information different from a first terminal identification ID given by a base station device before the handover and a second terminal identification ID given by a base station device after the handover.

15. A base station device that communicates with a terminal device, which performs repetition transmission in which same data is repeatedly transmitted, the base station device comprising:
a processor that generates continuation information which is information on continuation of the repetition transmission before and after handover; and
a wireless communication module that transmits the continuation information to the terminal device.

16. A data transmission method in a communication device that performs repetition transmission in which identical data is repeatedly transmitted, a communication method comprising:
receiving continuation information which is information on continuation of the repetition transmission before and after handover; and
performing the repetition transmission after the handover based on the continuation information.

17. A communication method in a base station device that communicates with a terminal device which performs repetition transmission in which same data is repeatedly transmitted, the communication method comprising:
generating continuation information which is information on continuation of the repetition transmission before and after handover; and
transmitting the continuation information to the terminal device.
